# EUROPÄISCHE PATENTSCHRIFT

(11) **EP 2 440 457 B1**
(45) Veröffentlichungstag und Bekanntmachung des Hinweises auf die Patenterteilung: **17.08.2016**
(21) Anmeldenummer: 10722670.6
(22) Anmeldetag: 21.05.2010
(51) Int. Cl.: B64D 11/00, B64C 1/06, B64F 5/00

(54) **SYSTEM UND VERFAHREN ZUM HERSTELLEN EINER FAHRZEUGKABINE**
SYSTEM AND METHOD FOR PRODUCING A VEHICLE CABIN
SYSTÈME ET PROCÉDÉ DE FABRICATION D'UNE CABINE DE VÉHICULE

(30) Priorität: 08.06.2009 DE 102009024157; 08.06.2009 US 184916 P
(43) Veröffentlichungstag der Anmeldung: 18.04.2012
(73) Patentinhaber: Airbus Operations GmbH, 21129 Hamburg (DE)
(72) Erfinder: GROSSE-PLANKERMANN, Peter, 21629 Neu Wulmstorf (DE); PÄTZ, Martin, 22609 Hamburg (DE); JUNGE, Philipp, 19322 Wittenberge (DE)
(74) Vertreter: Kopf Westenberger Wachenhausen Patentanwälte PartG mbB
(86) Internationale Anmeldenummer: PCT/EP2010/057051
(87) Internationale Veröffentlichungsnummer: WO 2010/145915

(56) Entgegenhaltungen:
- EP-A2- 0 035 955
- DE-A1-102007 050 422
- US-A- 5 024 398
- US-A- 5 083 727
- US-A1- 2004 016 847

## Beschreibung

### BEZUG AUF ZUGEHÖRIGE ANMELDUNGEN

Die vorliegende Anmeldung beansprucht die Priorität der US Provisional Patentanmeldung Nr. 61/184,916, eingereicht am 8. Juni 2009 und der deutschen Patentanmeldung Nr. 10 2009 024 157.4, eingereicht am 8. Juni 2009.

### TECHNISCHES GEBIET

Die Erfindung betrifft ein System zum Herstellen einer Fahrzeugkabine, ein Verfahren zum Herstellen einer Fahrzeugkabine, eine Verwendung eines derartigen Systems in einem Rumpfabschnitt eines Flugzeugs sowie ein Flugzeug mit mindestens einem Rumpfabschnitt und mindestens einem erfindungsgemäßen System.

### HINTERGRUND DER ERFINDUNG

In größeren Fahrzeugen, die dem Transport von Personen dienen, werden üblicherweise in designierten Fahrzeugabschnitten Passagierkabinen vorgesehen. Verbreitet werden hierzu eine Reihe von Verkleidungselementen, Kabinenausstattungskomponenten und größeren Kabinensystemen an mehreren Stellen mittels Haltern und Befestigungselementen mit einer Struktur, etwa der Primärstruktur, des Fahrzeugs verbunden. Aus optischen Gründen sind derartige Halter und Befestigungselemente verdeckt angeordnet, so dass sie in der fertig gestellten Kabine für den Passagier unsichtbar sind.

Abweichend hiervon existieren Konzepte, bei denen Teile einer Kabinenausstattung bis zu einem gewissen Grad vormontiert in einen offenen Fahrzeugrumpf eingebracht werden. So offenbaren US 2007/0241231 A1 und DE 10 2006 017 596 A1 etwa Bodenelemente für einzelne Abteile einer Flugzeugkabine mit darauf angeordneten Ausstattungskomponenten, etwa Stühlen, Betten und dergleichen, die durch zusätzliche Verkleidungselemente, Monumente und dergleichen ergänzt werden. In DE 10 2006 048 376 A1 und

WO 2008/043557 A1 wird eine freitragende und an einer Flugzeugstruktur anbringbare Kabinenstruktureinheit zum Anbringen von Kabineneinbauelementen für ein Flugzeug offenbart.

### ZUSAMMENFASSUNG DER ERFINDUNG

Es könnte als nachteilig aufgefasst werden, zum Herstellen einer Passagierkabine eine Fülle von unterschiedlichen Haltern und Befestigungselementen für unterschiedliche Verkleidungselemente und Kabinenausstattungskomponenten verwenden zu müssen.

Weiterhin ist jeder Halter und jedes Befestigungselement beispielsweise an der Primärstruktur des Fahrzeugs anzubringen, so dass diese hierfür auch ausgelegt werden muss, so dass für alle denkbaren Kabinenvarianten keine übermäßige Schwächung der Primärstruktur erfolgt.

Neben dem hohen Integrationsaufwand müssen auch die zu verwendenden Halter und Befestigungselemente bevorratet und bereitgestellt werden, was sich negativ auf die wirtschaftliche Effizienz bei der Herstellung einer Flugzeugkabine auswirken kann.

Schließlich ist während der aufwändigen manuellen Integration der Verkleidungselemente und Kabinenausstattungskomponenten der designierte Rumpfabschnitt durch Monteure und Techniker blockiert, was andere nachfolgende oder parallel zu erledigende Arbeiten an dem Fahrzeug verzögert.

Eine Aufgabe der Erfindung könnte demnach darin liegen, ein System zum Herstellen einer Fahrzeugkabine vorzuschlagen, das die oben genannten Nachteile verringert oder gänzlich beseitigt. Insbesondere könnte eine Aufgabe der Erfindung darin liegen, ein System zum Herstellen einer Fahrzeugkabine vorzuschlagen, welches einen flexiblen Aufbau derselben erlaubt, gleichermaßen aber mit einer möglichst geringen Anzahl unterschiedlicher Halter und Befestigungselemente in den Fahrzeugrumpf integriert werden kann.

US 5,083,727 beschreibt ein Luftfahrzeugkabinensystem mit mehreren Einrichtungskomponenten, im Deckenbereich angeordneten Trägern und im Bodenbereich angeordneten Schienen.

Das Dokument stellt den nächstliegenden Stand der Technik dar.

Eine weitere Aufgabe der Erfindung könnte darin liegen, die Integrationszeit zum Herstellen der Kabine innerhalb des Fahrzeugs zu verringern, so dass beispielsweise bei der Ausstattungsmontage des Fahrzeugs dessen Innenraum über einen geringstmöglichen Zeitraum blockiert wird.

Diese Aufgabe wird durch ein System gemäß dem ersten unabhängigen Anspruch gelöst. Vorteilhafte Weiterbildungen sind den Unteransprüchen zu entnehmen.

Weitere unabhängige Ansprüche haben ein entsprechendes Herstellungsverfahren (11), eine Verwendung (12) und ein Flugzeug mit einem erfindungsgemäßen Kabinenmodul (13) zum Gegenstand.

Das erfindungsgemäße System zum Herstellen einer Fahrzeugkabine weist mindestens eine erste Einrichtungskomponente, mindestens ein als Deckenpaneel ausgeführtes erstes Flächenelement und mindestens ein Führungselement auf. Das erste Flächenelement ist mittels des Führungselements verschiebbar an der ersten Einrichtungskomponente angeordnet. Das Führungselement kann in mindestens einer Montagestellung und in mindestens einer Betriebsstellung arretiert werden. Der Verbund aus dem ersten Flächenelement, dem Führungselement und der ersten Einrichtungskomponente bildet ein Kabinenmodul, welches äußere Abmessungen aufweist, die ein Einbringen in einen Rumpf eines Fahrzeugs erlauben. Das Kabinenmodul bildet in der Betriebsstellung zumindest einen Teil der Kabine in dem Rumpf des Fahrzeugs.

Eine Kabine kann aus einer Kombination aus Einrichtungskomponenten, die sich überwiegend in sämtliche Raumdimensionen erstrecken und Verkleidungsbauteilen mit einer insgesamt flachen und oftmals gekrümmten Gestalt bestehen. Mit der Bezeichnung des mindestens einen ersten Flächenelements werden solche Elemente bezeichnet, die im Wesentlichen flach sind, beispielsweise Verkleidungspaneele ("lining panels"), Deckenpaneele ("ceiling panels") und dergleichen.

Als Einrichtungskomponente kann jede denkbare Komponente angesehen werden, die üblicherweise in einer Fahrzeugkabine angeordnet ist. Hierzu können Staufächer, Stauschränke, Küchenelemente, Bordtoiletten, Kabinenabteile und dergleichen mehr zählen, die sich in alle Raumrichtungen erstrecken. Die Erfindung ist jedoch nicht auf eine der genannten Einrichtungskomponenten beschränkt, vielmehr ist durch die Flexibilität des erfindungsgemäßen Systems jede beliebige Einrichtungskomponente dazu geeignet, zur vorteilhaften Verwendung des erfindungsgemäßen Systems beizutragen. Es ist demnach in besonderen Fällen innerhalb einer zu realisierenden Kabine auch denkbar, dass unter dieser ersten Einrichtungskomponente auch ein flaches Bauteil, wie eine Trennwand, eine Abteilwand oder ein Verkleidungselement zu verstehen ist, so dass Bereiche in dem Fahrzeug ohne sich in sämtliche Raumdimensionen erstreckende Einrichtungskomponenten durch das erfindungsgemäße System an eine einfach herzustellende Kabine gelangen können.

Das Führungselement dient dazu, das Flächenelement an der Einrichtungskomponente geführt zu lagern, wobei auch das Führungselement durch beliebige Ausführungsformen realisiert werden kann, die den Gegenstand der Erfindung nicht beschränken. Auch ist der durch das Führungselement zu realisierende Führungsweg nicht auf bestimmte Ausführungsformen limitiert, sondern es können sowohl auch geradlinige als auch gekrümmte Führungsbahnen realisiert werden. Ebenso denkbar sind auch rotatorische Bewegungen mittels scharnierartigen Vorrichtungen oder dergleichen. Es ist weiterhin auch nicht erheblich, welche Anzahl von Komponenten das Führungselement aufweist und welche der Komponenten an der Einrichtungskomponente und welche der Komponenten an dem Flächenelement angeordnet sind.

Primär soll das Führungselement dazu dienen, eine Verbindung zwischen dem Flächenelement und der Einrichtungskomponente herzustellen. Gleichermaßen muss das Führungselement in mindestens einer Montagestellung und mindestens einer Betriebsstellung arretierbar sein. Dies kann durch eine Vielzahl von unterschiedlichen Arretiereinrichtungen mit kraft- oder formschlüssiger Wirkungsweise realisiert werden.

Das Kabinenmodul mit Flächenelement, Führungselement und Einrichtungskomponente weist in einer Montagestellung äußere Abmessungen auf, die das Einbringen in einen geöffneten Rumpf des Fahrzeugs erlauben, so dass das Kabinenmodul außerhalb des Fahrzeugrumpfs hergestellt werden kann. Dadurch entfällt die Notwendigkeit, während der Ausstattungsmontage des Fahrzeugs den designierten Rumpfabschnitt zu blockieren.

Durch den Vorfertigungsgrad kann die benötigte Zeit für die Integration in den Rumpfabschnitt des Fahrzeugs deutlich verringert werden.

In einer Betriebsstellung kann das Kabinenmodul jedoch eine solche Form aufweisen, dass es zumindest einen bevorzugt einen in Längsrichtung verlaufenden Abschnitt der Kabine bildet. Durch die Arretierung in der Betriebsstellung kann das Kabinenmodul in der gewünschten Form verbleiben und dauerhaft als Kabinenteil verwendet werden.

Das allgemeine Ziel ist, durch das Führungselement und die dadurch ermöglichte Relativbewegung zwischen der Einrichtungskomponente und dem Flächenelement eine Querschnittsverengung des Kabinenmoduls zu bewerkstelligen, um das vormontierte Kabinenmodul ohne Kollision mit einer Struktur des Fahrzeugs in dessen offenen Rumpf einzubringen.

An dieser Stelle sei darauf hingewiesen, dass bei Verwendung mehrerer Flächenelemente nicht zwangsläufig alle diese Flächenelemente über Führungselemente an einer Einrichtungskomponente gelagert sein müssen. Erfindungsgemäß werden Deckenpaneele mittels Führungselementen an räumlichen Einrichtungskomponenten gelagert, auch könnten seitliche Verkleidungselemente fest an diesen Einrichtungskomponenten angeordnet werden, da sie auch bei verschiebbarer Führung kaum dazu beitragen würden, die äußeren Dimensionen des Kabinenmoduls zu verringern. Andererseits könnten diese seitlichen Verkleidungselemente auch schwenkbar an den betreffenden Einrichtungskomponenten angeordnet werden, wodurch im Fußbodenbereich eine weitere Verengung hervorgerufen werden kann.

Das erfindungsgemäße System löst die Aufgabe der Erfindung dadurch, dass durch die Vorfertigung von Kabinenmodulen zunächst die in dem Fahrzeugrumpf zu verbringende Zeit verringert wird. Weiterhin wird eine sehr flexible Ausgestaltung der Kabine ermöglicht. Die Anzahl der im Rumpf notwendigen Befestigungselemente und Halter kann aufgrund der Selbsttragfähigkeit der mittels des erfindungsgemäßen Systems hergestellten Kabinenmodule verringert werden, die weiterhin vornehmlich an für alle denkbaren Ausführungsformen gleich bleibenden standardisierten Positionen angeordnet sein können.

Eine vorteilhafte Ausführungsform des erfindungsgemäßen Systems weist Befestigungselemente zum Befestigen des Kabinenmoduls an einem Fußboden der Passagierkabine auf. Diese Befestigungselemente sind dazu eingerichtet, das Kabinenmodul in der Betriebsstellung zu haltern, so dass die Relativposition zu dem Fahrzeugrumpf festgelegt ist und das selbsttragende Kabinenmodul ein sicheres Unterbringen von Passagieren innerhalb des Fahrzeugs gewährleisten kann. Die Befestigungselemente können eine beliebige Form aufweisen, die ein sicheres Haltern eines derartigen Kabinenmoduls erlauben.

In einer bevorzugten Ausführungsform des erfindungsgemäßen Systems sind die Befestigungselemente zum Befestigen an einem Fußboden in der Kabine als Fußbodenschienen ausgeführt, die an der Fußbodenstruktur befestigt werden können. Diese Fußbodenschienen könnten bevorzugt auf die gleiche Art realisiert werden, wie die üblicherweise in größeren Passagierkabinen befindlichen Sitzschienen zum Anordnen von Passagiersitzen.

In einer weiter vorteilhaften Ausführungsform des erfindungsgemäßen Systems ist das mindestens eine Führungselement mittels einer Führungsschiene und mindestens eines in der Führungsschiene verschiebbaren Läufers realisiert. Der Läufer lässt sich bevorzugt durch eine Relativbewegung zur Führungsschiene in einer Richtung, die nicht auf der Führungsbahn liegt, zur Führungsschiene arretiert werden. Dies könnte beispielsweise durch ein Anheben, Eindrücken, Verdrehen oder sonstige Bewegungsmöglichkeiten realisiert werden, wodurch der Läufer in eine entsprechende Vertiefung oder Tasche der Führungsschiene eintaucht und eine formschlüssige Verriegelung hervorruft.

In einer bevorzugten Ausführungsform des erfindungsgemäßen Systems weist der Läufer eine Form auf, die bei Ausrichten einer Erstreckungsrichtung des Läufers parallel zur Führungsbahn ein Gleiten innerhalb der Führungsschiene erlaubt, in einer anderen Ausrichtung jedoch eine Arretierung bezüglich der Führungsschiene veranlasst. So könnte etwa durch Verdrehen des Läufers, der eine ovale oder längliche Form aufweist, eine sichere Arretierung des Führungselements in einer oder mehreren Positionen, etwa der Montagestellung und der Betriebsstellung, ermöglicht werden.

Bei einer weiteren vorteilhaften Ausführungsform des erfindungsgemäßen Systems weist die mindestens eine erste Einrichtungskomponente an einer Begrenzungsfläche eine Öffnung auf, die ein Arretieren des Führungselements von außerhalb der Einrichtungskomponente ermöglicht. Ist beispielsweise die Einrichtungskomponente als ein Staufach realisiert und ist das Führungselement auf einer oberen Begrenzungsfläche des Staufachs angeordnet, wäre ein Bedienen eines Läufers nur relativ umständlich möglich. Der Läufer könnte so ausgeformt sein, dass er zumindest in bestimmten Positionen aus einer zur Einrichtungskomponente gewandten Seite der Führungsschiene herausragt und durch eine korrespondierende Öffnung in dieser Einrichtungskomponente durch Drehen, Ziehen oder Drücken in eine Arretierposition gebracht werden kann. Dies erleichtert die Montage von möglichst nicht sichtbaren und verdeckten Führungselementen möglich.

In einer bevorzugten Ausführungsform des erfindungsgemäßen Systems weist die mindestens eine erste Einrichtungskomponente mindestens eine Aufnahmefläche mit mindestens einem Haltekörper zum Aufnehmen mindestens einer zweiten Einrichtungskomponente auf. Der Haltekörper könnte derart ausgeführt werden, dass eine sichere form- oder kraftschlüssige Halterung von zweiten Einrichtungskomponenten ermöglicht wird. Denkbar sind haken- oder keilförmige Ausgestaltungen. Besteht die Kabine aus mehreren Kabinenmodulen, die hintereinander in den designierten Rumpfabschnitt des Fahrzeugs eingeschoben werden, können die Haltekörper derart ausgeführt werden, dass ein sukzessives Einschieben von zweiten Einrichtungskomponenten auf bereits in dem designierten Rumpfabschnitt befindlichen Kabinenmodulen durchgeführt werden kann. Jede nachfolgende zweite Einrichtungskomponente kann zum Stützen der vorherigen zweiten Einrichtungskomponente verwendet werden, falls sich die zweiten Einrichtungskomponenten ebenfalls über den designierten Rumpfabschnitt verteilen. Die Aufgabe wird ferner durch ein Verfahren zum Herstellen einer Kabine gemäß einem weiteren unabhängigen Anspruch gelöst. Bei diesem erfindungsgemäßen Verfahren wird mindestens ein als Deckenpaneel ausgeführtes erstes Flächenelement bereitgestellt, mindestens eine erste Einrichtungskomponente und mindestens ein Führungselement. Das Flächenelement wird mittels des Führungselements an der ersten Einrichtungskomponente angeordnet.

Wie die Bezeichnung "mindestens" bereits impliziert, können auch mehrere erste Einrichtungskomponenten und Flächenelemente miteinander kombiniert werden, um ein zusammenfaltbares oder zusammenschiebbares Kabinenmodul auszubilden. Das so ausgebildete Kabinenmodul wird in eine Montagestellung gebracht, in der das Führungselement in einer Montagestellung arretiert wird. Das Kabinenmodul wird in dem designierten Rumpfabschnitt eingebracht und dort an einem Halteelement am Kabinenfußboden befestigt.

In einer bevorzugten Ausführungsform des erfindungsgemäßen Verfahrens werden zweite Einrichtungskomponenten an Haltekörper aufweisende Aufnahmeflächen von ersten Einrichtungskomponenten angeordnet und dort befestigt.

Die Aufgabe wird weiterhin gelöst durch eine Einrichtungskomponente für eine Passagierkabine eines Fahrzeugs, das mit an mindestens einer Begrenzungsfläche angeordneten Führungsschiene ausgerüstet ist, in der ein Läufer verschiebbar angeordnet werden kann und in einer Montagestellung oder Betriebsstellung arretiert werden kann. Besonders bevorzugt ist die erste Einrichtungskomponente als ein Über-Kopf-Staufach ausgeführt.

Schließlich wird die Aufgabe durch die Verwendung eines erfindungsgemäßen Systems zum Herstellen einer Kabine in einem Flugzeug gelöst sowie durch ein Flugzeug mit mindestens einem designierten Rumpfabschnitt und mindestens einem erfindungsgemäßen System.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1a bis 1d zeigen anhand zweier zweidimensionaler und zugehöriger dreidimensionaler Darstellungen ein Ausführungsbeispiel des erfindungsgemäßen Systems.
Die Fig. 2a und 2b zeigen in einer dreidimensionalen Detailansicht einen Läufer in einer Führungsschiene.
Die Fig. 3a bis 3d zeigen die Montagestellung und eine Demontagestellung zusammen mit dem Führungselement in dreidimensionalen Ansichten.
Die Fig. 4a bis 4c zeigen den Vorgang des Anbringens zweiter Einrichtungskomponenten an Aufnahmeflächen von ersten Einrichtungskomponenten.
Die Fig. 5a und 5b zeigen den Vorgang des Herstellens eines Kabinenmoduls mittels des erfindungsgemäßen Systems.

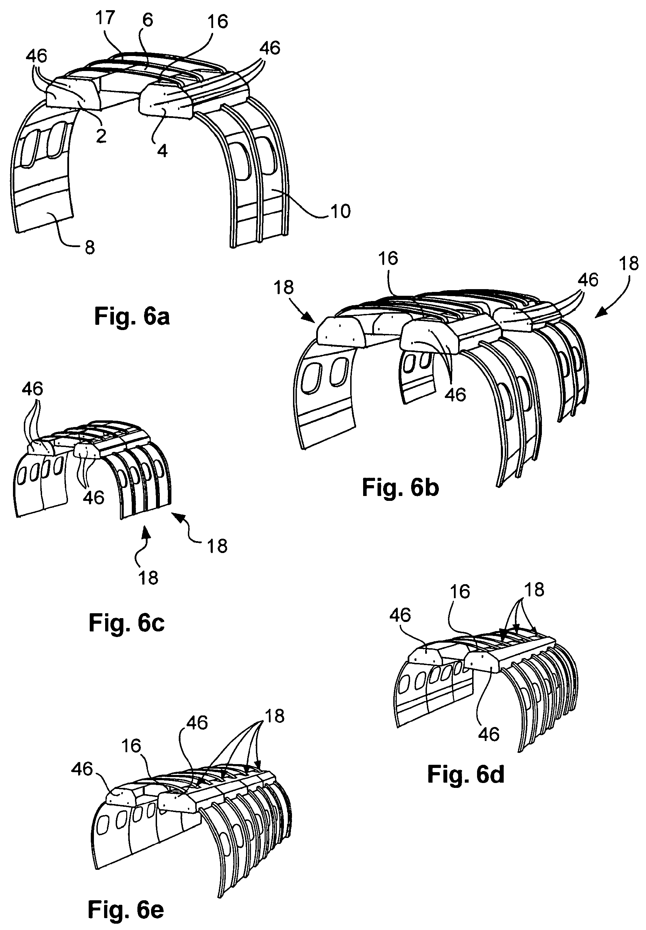

Fig. 6 zeigt das Aufreihen mehrerer Kabinenmodule.
Fig. 7 zeigt den Vorgang des Herstellens einer Kabine mittels mehrerer Kabinenmodule.

### DETAILLIERTE BESCHREIBUNG EXEMPLARISCHER AUSFÜHRUNGSBEISPIELE

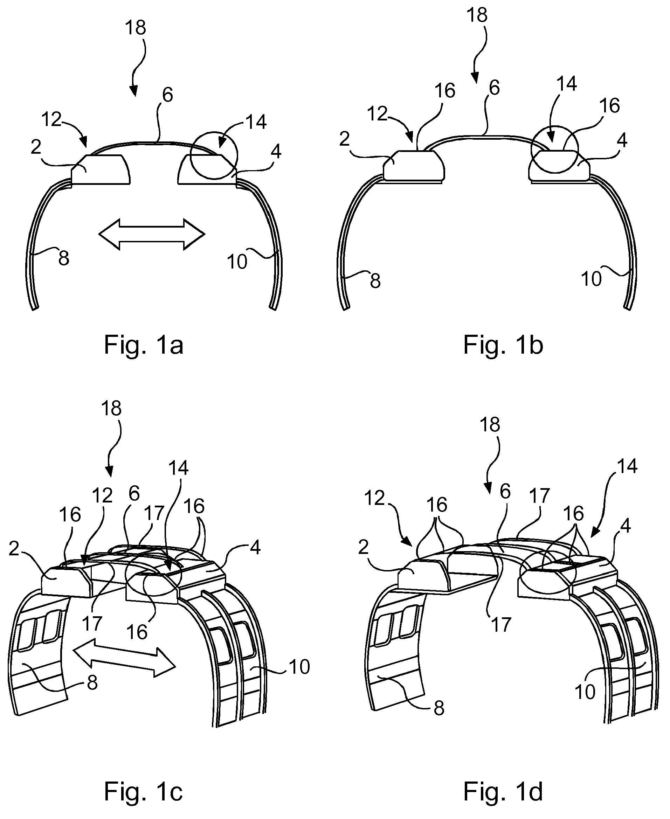

In den Fig. 1a bis 1d werden zwei erste Einrichtungskomponenten 2 und 4 gezeigt, an denen ein erstes Flächenelement 6 und jeweils ein zweites Flächenelement 8 und 10 angeordnet ist. Die ersten Einrichtungskomponenten 2 und 4 sind in dem gezeigten Ausführungsbeispiel als Über-Kopf-Staufächer ausgeführt, wie sie häufig in Passagierkabinen von Flugzeugen anzutreffen sind. Die ersten Einrichtungskomponenten 2 und 4 weisen auf ihrer jeweiligen Oberseite 12 bzw. 14 jeweils mehrere, beispielsweise vier, als Führungsschienen realisierte Führungselemente 16 auf, die bevorzugt in der Verlängerung von Versteifungsrippen 17 des ersten Flächenelements 6 angeordnet werden, wo die Versteifungsrippen 17 auf die Oberseite 12 bzw. 14 treffen. In den Führungselementen 16 sind Enden des ersten Flächenelements 6 verschiebbar gelagert. Dieser Verbund kann als Kabinenmodul 18 bezeichnet werden.

In den Fig. 1a und 1c ist eine Montagestellung ersichtlich, bei der die Enden des Flächenelements 6 in einem relativ weit außen liegenden Bereich des Führungselements 16 angeordnet sind. Die Breite des Kabinenmoduls 18 ist dadurch so gering wie möglich, da der Abstand zwischen den beiden ersten Einrichtungskomponenten 2 und 4 bzw. den beiden zweiten Flächenelementen 8 und 10 verkleinert wird. Dies ermöglicht ein Einschieben des Kabinenmoduls 18 in einen geöffneten Fahrzeugrumpf.

In den Fig. 1b und 1d wird eine sogenannte Betriebsstellung eingenommen, in der die Enden des ersten Flächenelements 6 in relativ weit innen liegenden Bereichen der Führungselemente 16 angeordnet sind. Dadurch liegen die ersten Einrichtungskomponenten 2 und 4 sowie die zweiten Flächenelemente 8 und 10 relativ weit außen, so dass die Breite des Kabinenmoduls 18 deutlich größer ist als in der Montagestellung. Dadurch kann das Anpassen der zweiten Flächenelemente 8 und 10 an die innere Kontur des Fahrzeugrumpfes erfolgen, die ersten Einrichtungskomponenten 2 und 4 befinden sich außerdem in ihrer jeweiligen Endposition.

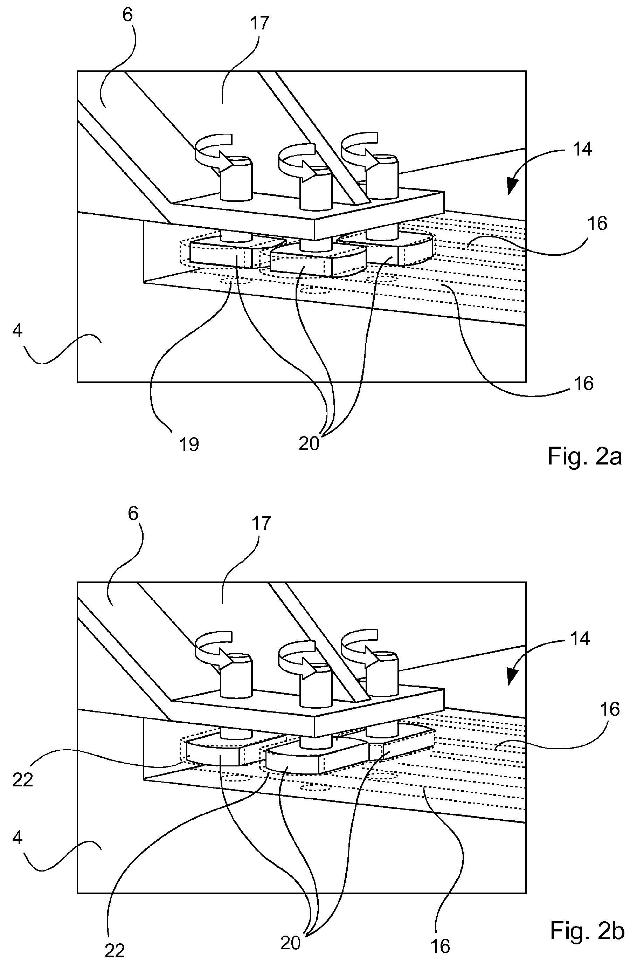

Die Fig. 2a und 2b zeigen in einer Detailansicht einen Ausschnitt von zwei nebeneinander angeordneten Führungselementen 16 auf einer Oberseite 14 einer ersten Einrichtungskomponente 4, in denen mehrere oval oder länglich geformte Läufer 20 angeordnet sind und sich innerhalb der Führungselemente 16 frei verschieben lassen. Die Läufer 20 sind in dem gezeigten Beispiel drehbar an dem ersten Flächenelement 6 gelagert und können durch Verdrehen von einer ersten Position, die in Fig. 2a dargestellt ist, in eine zweite Position, welche aus Fig. 2b ersichtlich wird, gebracht werden. Sind die Läufer 20 wie in Fig. 2b ausgerichtet, wird durch deren exemplarische längliche Form eine formschlüssige und/oder kraftschlüssige Verbindung mit entsprechend ausgeformten Taschen 22 der Führungsschiene eingegangen. Dies bedeutet, dass sich bei dieser Verbindung die erste Einrichtungskomponente 4 und das erste Flächenelement 6 zueinander nicht mehr bewegen können. Dies ist hilfreich, um das erste Flächenelement 6 in einer Betriebsstellung oder einer Montagestellung zuverlässig zu arretieren.

Damit ein in einen Fahrzeugrumpf eingebrachtes Kabinenmodul 18 auch in eine Betriebsstellung gebracht und dort arretiert werden kann, ist die Bedienbarkeit der Läufer 20 von innerhalb des Kabinenmoduls 18 erforderlich. Hierzu könnte die erste Einrichtungskomponente 2 oder 4 eine Öffnung 19 aufweisen, durch die ein jeweiliges Bedien-Ende eines Läufers 20 erreicht werden kann. Die Läufer 20 könnten dazu so konstruiert werden, dass durch eine geradlinige Druckbewegung aus dem Inneren einer ersten Einrichtungskomponente 2 oder 4 durch einen Monteur oder eine geeignete Vorrichtung eine Rotation des jeweiligen Läufers 20 erzeugt wird, so dass dieser aus dem arretierten in den gleitenden Zustand gebracht wird.

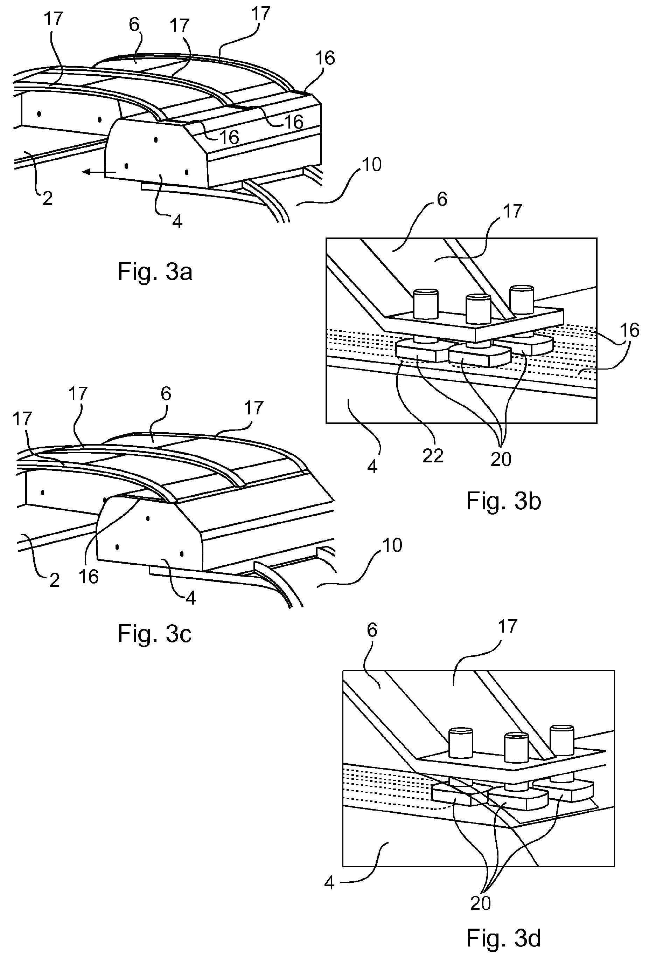

In den Fig. 3a bis 3d wird ferner gezeigt, dass nicht nur eine Montagestellung (Fig. 3a und 3b) von dem erfindungsgemäßen System eingenommen werden kann, sondern dass zur Demontage der ersten Einrichtungskomponente 4 auch eine Demontagestellung eingenommen werden kann, in der das erste Flächenelement 6 einen sehr weit außen liegenden Bereich der Führungselemente 16 einnimmt, so dass bei nach außen geöffneten Führungselementen 16 die Läufer 20 an dem außen liegenden Ende des Führungselements 16 diese verlassen können und die erste Einrichtungskomponente 4 entsprechend demontiert werden kann.

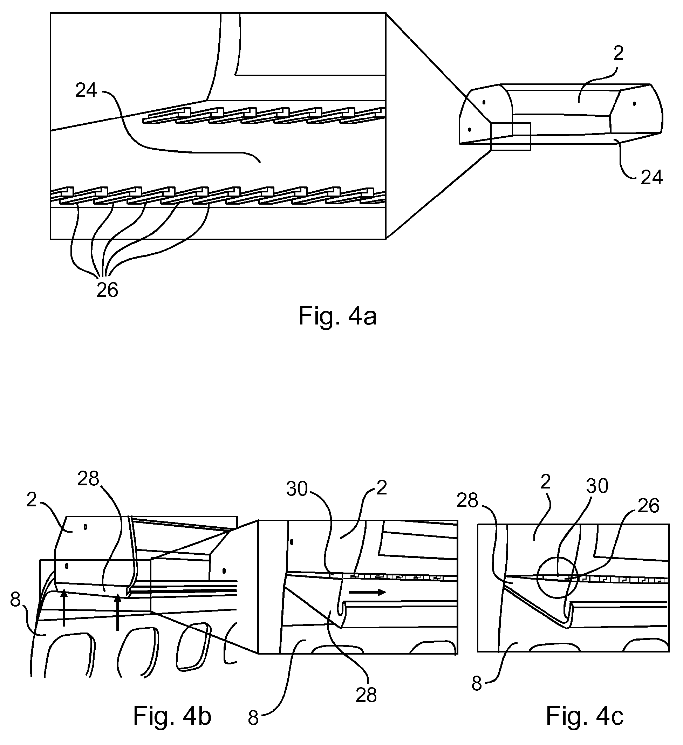

Zusätzlich können, wie in den Fig. 4a bis 4c gezeigt wird, die ersten Einrichtungskomponenten 2 und 4 eine Aufnahmefläche 24 aufweisen, die mit hakenförmigen ersten Haltekörpern 26 versehen ist. Hieran können zweite Einrichtungskomponenten 28 befestigt werden, beispielsweise wie hier dargestellt durch das Einführen bzw. Einbringen von korrespondierend geformten zweiten Haltekörpern 30.

Je nach Wunsch des Kunden könnten beispielsweise in einer Kabine eines Fahrzeugs verschiedene Klassen eingerichtet werden, die unterschiedliche Bestuhlungen aufweisen. Eine oder mehrere zweite Einrichtungskomponenten 28 könnten beispielsweise einen Versorgungskanal darstellen, der Bedienknöpfe, Leselampen, Anzeigen, Luftduschen und dergleichen aufweisen könnte. Dieser Versorgungskanal muss zum Sicherstellen einer Bedien- und Benutzbarkeit an die unterschiedlichen Bestuhlungen in der Kabine angepasst werden und könnte durch Verwenden der gezeigten ersten Haltekörper 26 an einer Aufnahmefläche 24 schnell gewechselt werden. Die ersten Haltekörper 26 könnten dabei beispielsweise einen zollweisen Abstand untereinander aufweisen, der dem Abstand zweier benachbarter Rasterpunkte in einer Sitzschiene in einem Kabinenfußboden entsprechen könnte.

Die Montage eines Versorgungskanals aus mehreren zweiten Einrichtungskomponenten 28 könnte dabei in drei wesentlichen Schritten erfolgen. Im ersten Schritt wird die zweite Einrichtungskomponente 28 zur Aufnahmefläche 24 angehoben und genau in den Lücken der ersten Haltekörper 26 positioniert. Durch Verschieben der zweiten Einrichtungskomponente 28 in Längsrichtung werden alle erste Haltekörper 26 mit den korrespondierenden zweiten Haltekörpern 28 ineinander formschlüssig verhakt. Sollten sich die ersten Haltekörper 26 und die zweiten Haltekörper 28 verjüngen, kann gleichzeitig eine kraftschlüssige Verbindung durch Klemmen hergestellt werden. Zusätzlich könnte eine Arretierung in Form eines klapp- und lösbaren Schnappmechanismus am Ende eines Kabinenmoduls 18 die Bewegung des gesamten aus zweiten Einrichtungskomponenten 28 gebildeten Versorgungskanals in Längs- und Querrichtung verhindern. Zur Wahrung der jeweils bereitgestellten Funktionen sind pneumatische und elektrische Schnittstellen erforderlich, die durch entsprechende Gestaltung in Form von Schnellkupplungen oder dergleichen nicht nur eine sicher Funktion, sondern auch ein schnelles Austauschen erlauben.

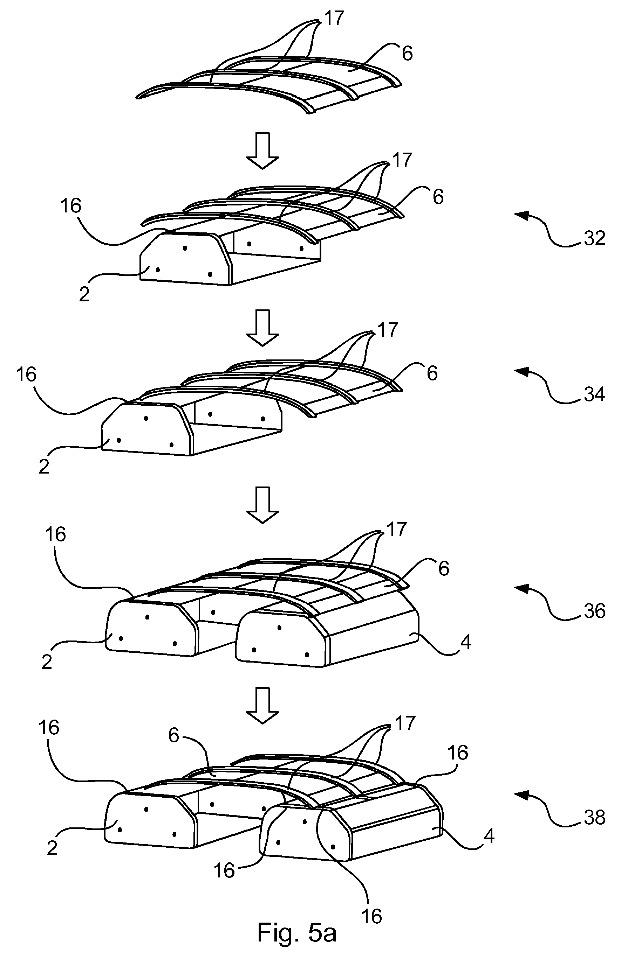

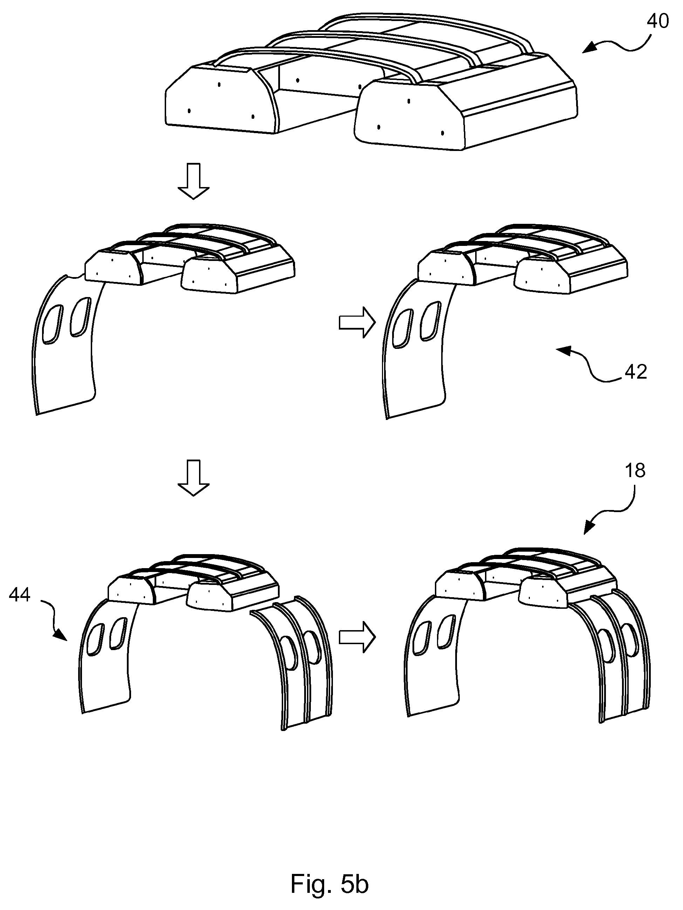

In den Fig. 5a und 5b wird das Herstellen eines einzelnen Kabinenmoduls 18 dargestellt, bei dem zunächst ein erstes Flächenelement 6 in Form eines Deckenpaneels angehoben 32 wird, mittels mehrerer Führungselemente 16 mit einer ersten Einrichtungskomponente 2 verbunden 34 wird, anschließend mit einer weiteren ersten Einrichtungskomponente 4 verbunden 36 wird und schließlich in einer Montagestellung arretiert 38 wird. Anschließend wird der Verbund aus erstem Flächenelement 6 und ersten Einrichtungskomponenten 2 und 4 angehoben 40, so dass ein zweites Flächenelement 8 an der ersten Einrichtungskomponente 2 angeordnet 42 und ein zweites Flächenelement 10 an der ersten Einrichtungskomponente 4 angeordnet 44 wird. Dies könnte durch Bolzen durchgeführt werden, die in Bohrungen der ersten Einrichtungskomponenten 2 und 4 sowie korrespondierenden Bohrungen der zweiten Flächenelemente 8 und 10 eingeführt und befestigt werden. Schließlich ist das Kabinenmodul 18 fertig gestellt und kann in der dargestellten Montagestellung in einen geöffneten Rumpf eines Fahrzeugs eingebracht werden.

Zum Bereitstellen einer Kabine, die sich über die gesamte Länge des designierten Rumpfabschnitts erstreckt, können mehrere Kabinenmodule 18 miteinander verbunden werden, beispielsweise indem sie aneinander angereiht und durch entsprechende Befestigungsmittel miteinander verspannt werden. Die Verbindung der Kabinenmodule 18 könnte im Bereich der ersten Einrichtungskomponenten 2 und 4 erfolgen, die dafür Bohrungen 46 aufweisen, durch die Verbindungselemente geführt und entsprechend verspannt werden könnten.

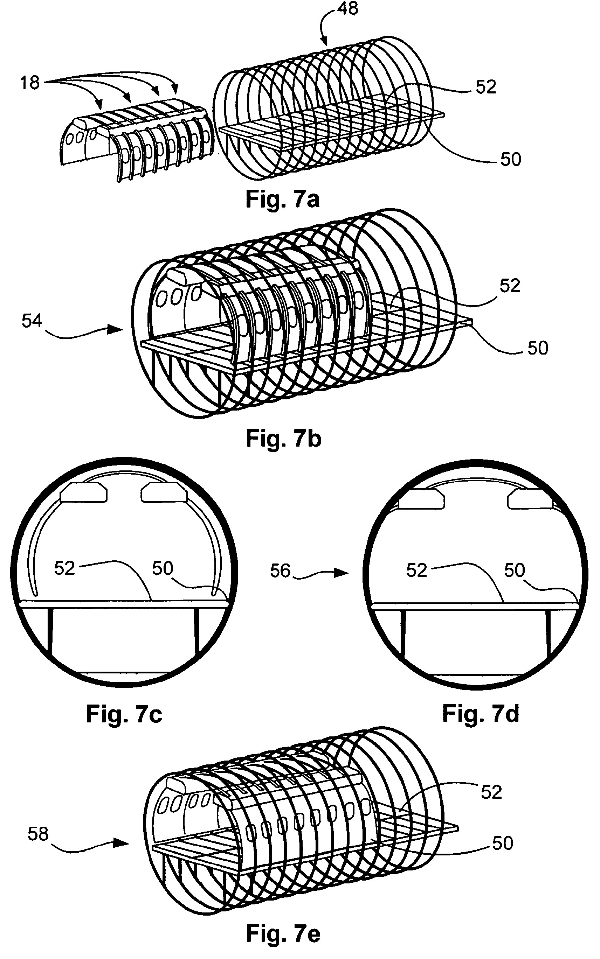

In Fig. 7 wird schließlich gezeigt, wie ein Verbund aus mehreren Kabinenmodulen 18 in einen designierten Rumpfabschnitt 48 eines Fahrzeugs eingebracht werden kann. In dem Rumpfabschnitt 48 werden vorweg als Fußbodenschienen realisierte Befestigungselemente 50 an einer Fußbodenstruktur 52 angeordnet, an denen die Module 18 montiert werden sollen. Mit Hilfe einer nicht dargestellten bewegbaren Vorrichtung kann der Verbund aus mehreren Kabinenmodulen 18 in den Rumpfabschnitt eingebracht werden 54 und anschließend bei Erreichen der Endposition in einer Betriebsstellung arretiert 56 werden. Nach Befestigen 58 der Module 18, etwa durch Verbinden unterer Enden der zweiten Flächenelemente 8 und 10 mit den Fußbodenschienen 50, ist die Kabine des Fahrzeugs einsatzbereit.

Ergänzend sei darauf hingewiesen, dass "umfassend" und "aufweisend" keine anderen Elemente oder Schritte ausschließt und "ein" oder "eine" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### BEZUGSZEICHEN

- 2: erste Einrichtungskomponente
- 4: erste Einrichtungskomponente
- 6: erstes Flächenelement
- 8: zweites Flächenelement
- 10: zweites Flächenelement
- 12: Oberseite
- 14: Oberseite
- 16: Führungselement
- 18: Kabinenmodul
- 19: Öffnung
- 20: Läufer
- 22: Tasche
- 24: Aufnahmefläche
- 26: erste Haltekörper
- 28: zweite Einrichtungskomponente
- 30: zweite Haltekörper
- 32: Anheben erstes Flächenelement
- 34: Verbinden mit einer ersten Einrichtungskomponente
- 36: Verbinden mit einer ersten Einrichtungskomponente
- 38: Arretieren in Montagestellung
- 40: Anheben
- 42: Anordnen zweites Flächenelement an erster Einrichtungskomponente
- 44: Anordnen zweites Flächenelement an erster Einrichtungskomponente
- 46: Bohrung
- 48: Rumpfabschnitt
- 50: Fußbodenschiene
- 52: Fußbodenstruktur
- 54: Einbringen in Rumpfabschnitt
- 56: Arretieren in Betriebsstellung
- 58: Befestigen Kabinenmodul

## Patentansprüche

1. System zum Herstellen einer Fahrzeugkabine, aufweisend
- mindestens eine erste Einrichtungskomponente (2, 4),
- mindestens ein als Deckenpaneel ausgeführtes erstes Flächenelement (6) und
- mindestens ein Führungselement (16),
wobei das erste Flächenelement (6) mittels des Führungselements (16) verschiebbar an der ersten Einrichtungskomponente (2, 4) zum Bilden eines Kabinenmoduls (18) angeordnet ist,
wobei das Führungselement (16) in mindestens einer Montagestellung und mindestens einer Betriebsstellung arretierbar ist,
wobei das Kabinenmodul (18) in Montagestellung äußere Abmessungen aufweist, die ein Einbringen in einen Rumpfabschnitt (48) eines Fahrzeugs erlauben und
wobei das Kabinenmodul (18) in Betriebsstellung zumindest einen Abschnitt einer Kabine in dem Rumpfabschnitt (48) des Fahrzeugs bildet.

2. System nach Anspruch 1,
ferner aufweisend Befestigungselemente (50) zum Befestigen des Kabinenmoduls (18) an einem Fußboden (52) in dem Rumpfabschnitt (48).

3. System nach Anspruch 2,
wobei die Befestigungselemente (50) als mindestens eine Fußbodenschiene realisiert sind.

4. System nach einem der vorhergehenden Ansprüche,
KK:CRA
wobei das Führungselement (16) als Kombination aus einer Führungsschiene und mindestens einem in der Führungsschiene bewegbaren Läufer (20) realisiert.

5. System nach Anspruch 4,
wobei der mindestens eine Läufer (20) eine längliche Form aufweist, die ein Verschieben des Läufers (20) bei Ausrichten der Erstreckungsrichtung des Läufers (20) parallel zur Führungsbahn der Führungsschiene erlaubt und den Läufer (20) bei abweichender Ausrichtung des Läufers (20) in der Führungsschiene arretiert.

6. System nach einem der vorhergehenden Ansprüche,
wobei das Führungselement (16) dazu eingerichtet ist, von einem Ort innerhalb des Kabinenmoduls (18) bedient zu werden.

7. System nach einem der vorhergehenden Ansprüche,
wobei zumindest eine erste Einrichtungskomponente (2, 4) eine Öffnung (19) zum Arretieren oder Lösen des Führungselements (16) aufweist.

8. System nach einem der vorhergehenden Ansprüche,
wobei die erste Einrichtungskomponente (2, 4) mindestens eine Aufnahmefläche (24) mit voneinander beabstandeten ersten Haltekörpern (26) zum Aufnehmen mindestens einer zweiten Einrichtungskomponente (28) aufweist.

9. System nach Anspruch 8,
wobei die zweite Einrichtungskomponente (28) zum Eingehen einer Verbindung mit den ersten Haltekörpern (26) korrespondierend geformte zweite Haltekörper (30) aufweist.

10. System nach einem der vorhergehenden Ansprüche,
wobei ein zweites Flächenelement (8, 10) als Seitenverkleidungselement ausgeführt, ist.

11. Verfahren zum Herstellen einer Fahrzeugkabine, aufweisend die Schritte:
- Anheben (32) eines als Deckenpaneel ausgeführtes ersten Flächenelements (6);
- Verbinden (34, 36) des ersten Flächenelements (6) mit mindestens einer ersten Einrichtungskomponente (2, 4) mittels mindestens eines Führungselements (16);
- Arretieren (38) des Führungselements (16) in einer Montagestellung;
- Anheben (40) des Verbundes aus erstem Flächenelement (6) und erster Einrichtungskomponente (2, 4);
- Anordnen (42) von mindestens einem zweiten Flächenelement (8, 10) an der ersten Einrichtungskomponente (2, 4) zum Ausbilden eines vollständigen Kabinenmoduls (18);
- Einbringen (54) des Kabinenmoduls (18) in einen Rumpfabschnitt (48) des Fahrzeugs;
- Arretieren (56) des Kabinenmoduls in einer Betriebsstellung;
- Befestigen (58) des Kabinenmoduls in dem Rumpfabschnitt (48).

12. Verwendung eines Systems nach einem der Ansprüche 1 bis 10 in einem Rumpfabschnitt (48) eines Flugzeugs.

13. Flugzeug, aufweisend
- mindestens einen Rumpfabschnitt (48),
- einen dort angeordneten Fußboden (52) und mindestens ein
- Kabinenmodul gebildet mit einem System nach einem der Ansprüche 1 bis 10 (18),
wobei das Kabinenmodul (18) mindestens eine erste Einrichtungskomponente (2, 4), mindestens ein als Deckenpaneel ausgeführtes erstes Flächenelement (6) und mindestens ein Führungselement (16) aufweist, wobei das erste Flächenelement (6) mittels des Führungselements (16) verschiebbar an der ersten Einrichtungskomponente (2, 4) angeordnet ist und das Führungselement (16) in mindestens einer Montagestellung und mindestens einer Betriebsstellung arretierbar ist, wobei das Kabinenmodul (18) in Betriebsstellung zumindest einen Abschnitt einer Kabine in dem Rumpfabschnitt (48) bildet.

## Claims

1. A system for manufacturing a vehicle cabin, comprising
- at least one first installation component (2, 4),
- at least one first surface element (6) designed as a ceiling panel, and
- at least one guide element (16),
wherein the first surface element (6) is slidably arranged on the first installation component (2, 4) by means of the guide element (16) to form a cabin module (18),
wherein the guide element (16) is lockable in at least one assembly position and at least one operating position,
wherein the cabin module (18) in the assembly position comprises outer dimensions enabling incorporation into a fuselage section (48) of a vehicle, and
wherein the cabin module (18) in the operating position makes up at least a section of the cabin in the fuselage section (48) of the vehicle.

2. The system of claim 1,
further comprising fastening elements (50) for securing the cabin module (18) to a floor (52) in the fuselage section (48).

3. The system of claim 2,
wherein the fastening elements (50) are realized as at least one floor rail.

4. The system of one of the preceding claims,
wherein the guide element (16) is realized as a combination of a guide rail and at least one runner (20) that is movable in the guide rail.

5. The system of claim 4,
wherein the at least one runner (20) comprises an oblong shape, which allows the runner (20) to shift when the runner (20) is aligned to extend in the direction parallel to the guide path of the guide rail, and locks the runner (20) in the guide rail given a deviating alignment of the runner (20).

6. The system of one of the preceding claims,
wherein the guide element (16) is set up to be operated from a location inside the cabin module (18).

7. The system of one of the preceding claims,
wherein at least one first installation component (2, 4) comprises an opening (19) for locking or releasing the guide element (16).

8. The system of one of the preceding claims,
wherein the first installation component (2, 4) comprises at least one receiving surface (24) with spaced apart first retaining bodies (26) for receiving at least one second installation component (28).

9. The system of claim 8,
wherein the second installation component (28) comprises correspondingly shaped second retaining bodies (30) for establishing a connection with the first retaining bodies (26).

10. System of one of the preceding claims,
wherein a second surface element (8, 10) is designed as a lateral cladding element.

11. A method for manufacturing a vehicle cabin, comprising the following steps:
- Lifting (32) a first surface element (6) designed as a ceiling panel;
- Connecting (34, 36) the first surface element (6) with at least one first installation component (2, 4) by means of at least one guide element (16);
- Locking (38) the guide element (16) in an assembly position;
- Lifting (40) the grouping comprised of the first surface element (6) and first installation component (2, 4);
- Arranging (42) at least one second surface element (8, 10) on the first installation component (2, 4) to form a complete cabin module (18);
- Introducing (54) the cabin module (18) into a fuselage section (48) of the vehicle;
- Locking (56) the cabin module in an operating position;
- Attaching (58) the cabin module in the fuselage section (48).

12. Use of a system of one of claims 1 to 10 in a fuselage section (48) of an aircraft.

13. An aircraft, comprising
- at least one fuselage section (48),
- a floor (52) arranged there, and at least one
- cabin module (18) created with a system according to one of the claims 1 to 10, wherein the cabin module (18) comprises at least one first installation component (2, 4), at least one first surface element (6) designed as a ceiling panel, and at least one guide element (16), wherein the first surface element (6) is slidably arranged on the first installation component (2, 4) by means of the guide element (16), and the guide element (16) is lockable into at least one assembly position and at least one operating position, wherein the cabin module (18) forms at least one section of a cabin in the fuselage section (48) in the operating position.

## Revendications

1. Système de fabrication d'une cabine de véhicule, comportant :
- au moins un premier composant d'aménagement (2, 4),
- au moins un premier élément de surface (6) réalisé sous la forme d'un panneau de plafond, et
- au moins un élément de guidage (16),
dans lequel le premier élément de surface (6) est disposé sur le premier composant d'aménagement (2, 4) de manière coulissante au moyen de l'élément de guidage (16) afin de former un module de cabine (18),
dans lequel l'élément de guidage (16) peut être bloqué dans au moins une position de montage et au moins une position de service,
dans lequel le module de cabine (18) comporte, en position de montage, des dimensions extérieures qui permettent une introduction dans une portion de fuselage (48) d'un véhicule et
dans lequel le module de cabine (18) forme, en position de service, au moins une portion d'une cabine dans la portion de fuselage (48) du véhicule.

2. Système selon la revendication 1,
comportant en outre des éléments de fixation (50) destinés à fixer le module de cabine (18) sur un plancher (52) dans la portion de fuselage (48).

3. Système selon la revendication 2,
dans lequel les éléments de fixation (50) sont réalisés sous la forme d'au moins un rail de plancher.

4. Système selon l'une des revendications précédentes, dans lequel l'élément de guidage (16) est réalisé sous la forme d'une combinaison d'un rail de guidage et d'au moins un curseur (20) mobile dans le rail de guidage.

5. Système selon 1a revendication 4,
dans lequel l'au moins un curseur (20) possède une forme allongée, qui permet un déplacement du curseur (20) lorsque la direction d'extension du curseur (20) est orientée parallèlement au chemin de guidage du rail de guidage et qui bloque le curseur (20) dans le rail de guidage en cas d'orientation différente du curseur (20).

6. Système selon l'une des revendications précédentes, dans lequel l'élément de guidage (16) est configuré pour être actionné d'un endroit à l'intérieur du module de cabine (18).

7. Système selon l'une des revendications précédentes, dans lequel au moins un premier composant d'aménagement (2, 4) comporte un orifice (19) pour bloquer ou débloquer l'élément de guidage (16).

8. Système selon l'une des revendications précédentes, dans lequel le premier composant d'aménagement (2, 4) comporte au moins une surface de réception (24) dotée de premiers corps de retenue (26) espacés entre eux pour recevoir au moins un second composant d'aménagement (28).

9. Système selon la revendication 8,
dans lequel le second composant d'aménagement (28) comporte des seconds corps de retenue (30) formés de manière correspondante pour établir une liaison avec les premiers corps de retenue (26).

10. Système selon l'une des revendications précédentes,
dans lequel un second élément de surface (8, 10) est réalisé sous la forme d'un élément d'habillage latéral.

11. Procédé de fabrication d'une cabine de véhicule, comportant les étapes consistant à :
- lever (32) un premier élément de surface (6) réalisé sous la forme d'un panneau de plafond ;
- relier (34, 36) le premier élément de surface (6) à au moins un premier composant d'aménagement (2, 4) au moyen d'au moins un élément de guidage (16) ;
- bloquer (38) l'élément de guidage (16) dans une position de montage ;
- lever (40) l'assemblage constitué du premier élément de surface (6) et du premier composant d'aménagement (2, 4) ;
- disposer (42) au moins un second élément de surface (8, 10) sur le premier composant d'aménagement (2, 4) pour former un module de cabine (18) complet ;
- introduire (54) le module de cabine (18) dans une portion de fuselage (48) du véhicule ;
- bloquer (56) le module de cabine dans une position de service ;
- fixer (58) le module de cabine dans la portion de fuselage (48).

12. Utilisation d'un système selon l'une des revendications 1 à 10 dans une portion de fuselage (48) d'un aéronef.

13. Aéronef, comportant :
- au moins une portion de fuselage (48),
- un plancher (52) disposé dans celle-ci, et au moins un
- module de cabine (18)formé au moyen d'un système selon l'une des revendications 1 à 10,
dans lequel le module de cabine (18) comporte au moins un premier composant d'aménagement (2, 4), au moins un premier élément de surface (6) réalisé sous la forme d'un panneau de plafond et au moins un élément de guidage (16), le premier élément de surface (6) étant disposé sur le premier composant d'aménagement (2, 4) de manière coulissante au moyen de l'élément de guidage (16) et l'élément de guidage (16) pouvant être bloqué dans au moins une position de montage et au moins une position de service, le module de cabine (18) formant, en position de service, au moins une portion d'une cabine dans la portion de fuselage (48).
